# EUROPEAN PATENT APPLICATION

(11) **EP 1 004 792 A2**
(43) Date of publication of application: **31.05.2000**
(21) Application number: 99119760.9
(22) Date of filing: 06.10.1999
(51) Int. Cl.: F16F 9/54

(54) **Direct mount snap-in air damper**

(30) Priority: 24.11.1998 US 199994
(71) Applicant: ILLINOIS TOOL WORKS INC., Glenview, Cook County, Illinois 60025 (US)
(72) Inventor: Wach, Joseph, Ingleside, Illinois 60041 (US)
(74) Representative: Vetter, Ewald Otto

(57) **Abstract**

The damper (10) includes a damper housing (14) and a piston assembly (12) reciprocating therein. The damper housing (14) includes an attachment device (22) formed of an interior partially circular wall (16) with a triangular cross section thereby forming an interior partially circular apex (24) for engaging a cylindrical boss (100). This allows the damper (10) to rotate about an axis of the interior partially circular wall (16) and pivot about an axis perpendicular to the rotational axis. Additionally, the piston assembly (12) includes a detent protrusion (64) formed from a stem (66) supporting a head (68), the radius of the head (68) being greater than that of the stem (66). The detent protrusion (64) is engaged by a keyhole-shaped aperture (200) with a first portion (204) with a radius of curvature substantially equal to that of the stem (66) and a second portion (202) with a radius of curvature substantially equal to that of the head (68). The detent protrusion (64) can therefore rotate within the keyhole-shaped aperture (200). Additionally, the cap of the damper housing (14) is formed of elastic O-rings (50) to allow the piston assembly (12) to rotate within the damper housing (14).

## Description

### BACKGROUND OF THE INVENTION

This application is a continuation-in-part of application serial no. 09/177,029 filed on October 22, 1998, entitled Silent Damper with Anti-Rattle Shaft, the disclosure of which is hereby incorporated by reference.

### Field of the Invention

This invention pertains to a silent damper which is installed by snapping a damper housing over a boss and snapping a detent protrusion on the shaft into a keyhole-shaped aperture. In operation, the damper housing pivots both horizontally and vertically about the boss as the shaft is pulled outwardly. A typical application for such a damper would be for use with an automotive glove box wherein the boss is attached to the glove box instrument panel and the keyhole-shaped aperture is molded into the side of the glove box wall.

### Description of the Prior Art

In the prior art, it is known to use a damper in connection with doors, particularly for gloveboxes in automotive applications. However, these prior art dampers require secondary fasteners to attach to the glovebox and to the dashboard (or other relatively stationary object) of the automobile. These secondary fasteners increase installation cost and have a tendency to rattle. These prior art dampers typically do not adjust for angled applications or dimensional variations and are therefore susceptible to binding. Additionally, these prior art dampers typically do not adjust easily between right and left-hand configurations.

Examples of prior art references in this general field of art and related fields of art include U.S. Patent No. 5,756,890 entitled "Snap Mount Throttle Position Sensor", issued to Fedison, Jr. on May 26, 1998; U.S. Patent No. 5,741,007 entitled "Damper Rotational Latch", issued to Witt on April 21, 1998; U.S. Patent No. 5,622,242 entitled "Shock Absorber, and Shock Absorber, Such as MacPherson Strut, with Decompression Stop Limit Bracket", issued to Handke et al. on April 22, 1997; U.S. Patent No. 5,615,867 entitled "Fluid-Filled Unit of a Cylinder and a Piston Rod, in Particular Gas Spring", issued to Bauer on April 1, 1997; U.S. Patent No. 5,398,820 entitled "Doll-Holder Wall Mount", issued to Kiss on March 21, 1995; U.S. Patent No. 5,104,359 entitled "Tensioner with Reduced Rattling", issued on April 14, 1992 to Shirai et al.; U.S. Patent No. 4,781,608 entitled "Busbar Holder of Plastic", issued on November 1, 1988 to Hillmann; U.S. Patent No. 4,637,747 entitled "Device for Mounting a Protective Cap on a Support", issued on January 20, 1987 to Perrin et al.; and U.S. Patent No. 3,887,961 entitled "Damping Assemblies for Doors or the Like", issued on June 10, 1975 to Saajos.

### OBJECTS AND SUMMARY OF THE INVENTION

It is therefore an object of this invention to provide a damper, for automotive glovebox or similar applications, which can be installed without the need for secondary fasteners.

It is therefore a further object of this invention to provide a damper, for automotive glovebox or similar applications, which has a decreased tendency to rattle.

It is therefore a still further object of this invention to provide a damper, for automotive glovebox or similar applications, which has decreased installation costs.

It is therefore a still further object of this invention to provide a damper, for automotive glovebox or similar applications, which has a decreased tendency for binding.

It is therefore a still further object of this invention to provide a damper, for automotive glovebox or similar applications, which can be easily adjusted from a right-hand part to a left-hand part, and vice versa.

These and other objects are attained by providing a damper with a damper housing and a piston assembly. The damper housing includes a snap-on attachment device formed of a portion of a circle. This attachment device attaches to a cylindrical structure, such as an instrument panel boss, and allows the damper to rotate both horizontally and vertically as the shaft of the piston assembly is pulled outwardly.

The shaft of the piston assembly further includes a detent protrusion which is snapped into a keyhole-shaped aperture which is typically molded into the side of the glovebox wall.

The cap of the damper is formed from two elastic O-rings. A first O-ring generally engages the periphery of the damper housing and passes through two grooves within periphery of the damper housing so that portions of the O-ring form a first pair of parallel chords within the circular cross section of the damper housing. A second O-ring is engaged by two opposed hooks on the mouth of the damper housing so as to form a second pair of parallel chords within the circular cross section of the damper housing. The second pair of parallel chords is oriented ninety degrees with respect to the first pair of parallel chords. The rectangular intersection of the two pairs of parallel chords formed by the O-rings supports the piston shaft of rectangular cross section. The resulting elastic configuration of the O-rings compensates for misalignment of the damper and allows the piston assembly to rotate during operation of the damper without binding. Additionally, this elastic configuration allows a user or installer to simply rotate the piston by 180° within the damper housing in order to convert from a left-hand part to a right-hand part, and vice versa.

### BRIEF DESCRIPTION OF THE DRAWINGS

Further objects and advantages of the invention will become apparent from the following description and claims, and from the accompanying drawings, wherein:
Figure 1 is a side plan view of the damper of the present invention in the retracted position, with both the instrument panel boss and the keyhole-shaped aperture of the glovebox shown in phantom.
Figure 2 is a side plan view of the damper of the present invention in the extended position, with both the instrument panel boss and the keyhole-shaped aperture of the glovebox shown in phantom.
Figure 3 is a front plan view of the damper of the present invention.
Figure 4 is a side plan view of the piston assembly of the present invention.
Figure 5 is a cross-sectional view of the attachment device of the present invention along plane 5-5 of Figure 2.
Figure 6 is a side plan view of the attachment device of the damper housing of the present invention.
Figure 7 is a side cross-sectional view of the housing of the damper of the present invention.
Figure 8 is a top cross-sectional view of the housing of the damper of the present invention.

### DETAILED DESCRIPTION OF THE PREFERRED EMBODIMENT

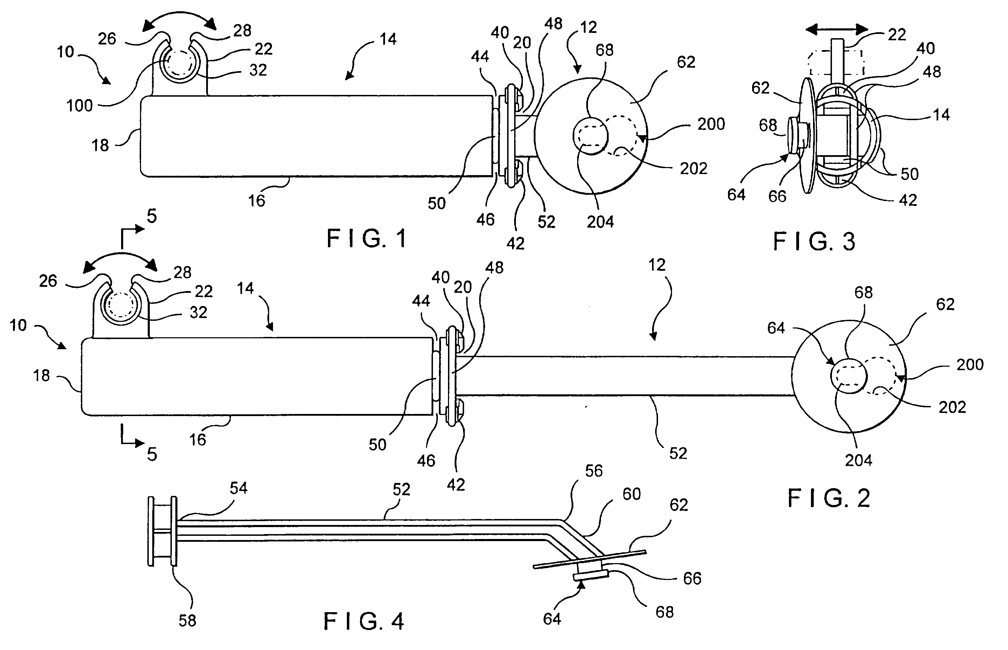

Referring now to the drawings in detail wherein like numerals refer to like elements throughout the several views, one sees that Figures 1 and 2 are side plan views of the damper 10 of the present invention with the piston assembly 12 in the retracted and extended positions, respectively, in relation to the damper housing 14. Additionally, the cylindrical boss 100, typically formed on an instrument panel in an automotive application, and the keyhole-shaped aperture 200, typically formed on the glovebox in an automotive application, are shown in phantom in Figures 1 and 2. Damper 10 is typically constructed of plastic.

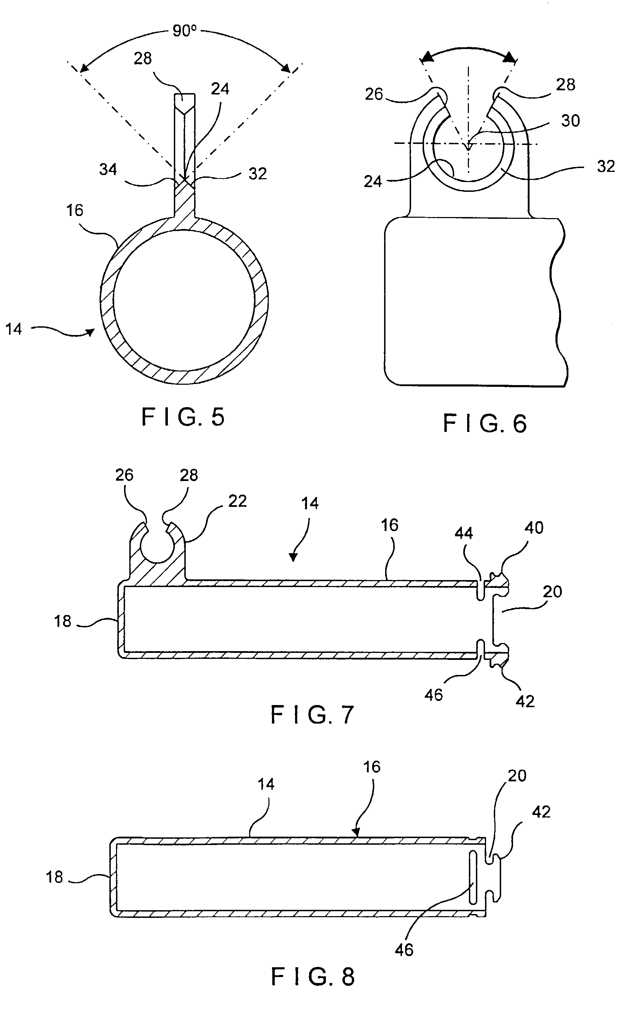

Damper housing 14 is formed by cylindrical wall 16 with closed end 18 and open end or mouth 20. Attachment device 22 is formed on cylindrical wall 16 inwardly adjacent from closed end 18 of damper housing 14. Attachment device 22 extends radially outward from cylindrical wall 16 and includes partially circular interior apex 24 which forms a portion of a circle greater than 180° and less than 360°, typically about 270°. This allows a cylindrical boss 100 to pass between the ends 26, 28 of interior circular apex 24 and be detent engaged therein while allowing damper housing 14 to rotate about cylindrical boss 100 (as shown in Figures 1 and 2) or, in other words, about rotational axis 30 of attachment device 22 as shown in Figure 6. As can be seen from Figure 6, the inclination of ends 26, 28 of interior circular apex 24 is not directly radially outward from the rotational axis 30 about which interior circular apex 24 is formed. That is, the projections of ends 26, 28 do not pass through rotational axis 30. More particularly, the opening between ends 26, 28 of interior circular apex 24 is about 90°, while the ends 26, 28 are inclined approximately 70° with respect to each other.

As shown in Figure 5, interior circular apex 24 of attachment device 22 is formed by the intersection of oblique circular walls 32, 34. Oblique circular walls 32, 34 are inclined at opposing 45° angles so as to form interior circular apex 24 at a 90° angle resulting in a triangular cross section as shown in Figure 5. This configuration of interior circular apex 24 allows the portion of damper 10 toward piston assembly 12 to pivot from side to side as indicated by the arrow above Figure 3. This pivoting is about a vertical axis ("vertical" in the illustrated configuration) perpendicular to rotational axis 30 of attachment device 22.

As shown in Figures 3, 7, and 8, mouth 20 of damper housing 14 includes opposed hooks 40, 42 which are outwardly adjacent from opposed notches 44, 46. Opposed hooks 40, 42 engage first elastic O-ring 48 and opposed notches 44, 46 engage second elastic O-ring 50. This configuration forms a cap configuration which engages piston assembly 12, but allows piston assembly to rotate without binding. This configuration further allows an installer to change simply between a right-hand configuration and a left-hand configuration and vice versa. This configuration is explained in further detail in application serial no. 09/177,029, filed October 22, 1998, the disclosure of which is hereby incorporated by reference.

As shown in Figure 4, piston assembly 12 includes shaft 52 with proximal end 54 and distal end 56. Proximal end 54 is attached to disk assembly 58 which slidingly engages the interior of cylindrical wall 16 of damper housing 14 during reciprocation of piston assembly 12. Disk assembly 58 may have directionally dependent damping characteristics as described in the above-identified application serial no. 09/177,029. Distal end 56 of shaft 52 attaches to angled portion 60, which in turn attaches to circular attachment head 62.

The center of circular attachment head 62 includes cylindrical detent protrusion 64 which further includes stem 66 which supports enlarged head 68. Both stem 66 and enlarged head 68 are of cylindrical shape, with enlarged head 68 of a greater radius than stem 66. As shown in Figures 1 and 2, keyhole-shaped aperture 200 includes a larger portion 202 with a radius of curvature substantially equal to the radius of enlarged head 68 and a smaller portion 204 with a radius of curvature substantially equal to the radius of stem 66. This allows enlarged head 68 to be inserted into the larger portion 202 of keyhole-shaped aperture 200 (shown in phantom) so that the stem 66 can be snapped into or otherwise engaged by the smaller portion 204 of keyhole-shaped aperture 200. This further allows stem 66 to rotate within smaller portion 204 of keyhole-shaped aperture 200 during the operation of damper 10 without binding.

Typically, keyhole-shaped aperture 200 is formed within the door of the glovebox (not shown) while boss 100 is formed on an instrument panel in an automotive application. Damper 10 therefore is used to dampen the movement of the glovebox door.

In order to use damper 10, an installer typically twists piston assembly 12, if necessary, to obtain the desired left-hand or right-hand configuration. The installer then engages attachment device 22 to boss 100 and cylindrical detent protrusion 64 to keyhole-shaped aperture 200. During operation, the position of damper 10 can self-adjust or adapt in several ways to variations or misalignment without binding. Damper 10 can rotationally pivot about axis 30 of attachment device 24. Damper 10 can additionally pivot about an axis perpendicular to axis 30 (see Figure 3). Piston assembly 12 can rotate within damper housing 13. Cylindrical detent protrusion 64 can rotate within keyhole-shaped aperture 200. This configuration is relatively free of rattle during operation.

Thus the several aforementioned objects and advantages are most effectively attained. Although a single preferred embodiment of the invention has been disclosed and described in detail herein, it should be understood that this invention is in no sense limited thereby and its scope is to be determined by that of the appended claims.

## Claims

1. A damper comprising:
a housing with cylindrical walls;
a piston assembly reciprocating within said housing, said piston assembly including a piston shaft with a first end and a second end, said first end including a piston for reciprocally engaging an interior of said cylindrical walls, said second end including an attachment head, said attachment head including a detent protrusion; and
said housing including an attachment device with a partially circular interior wall for engaging a cylindrical boss.

2. The damper of Claim 1 wherein said detent protrusion includes a stem and a head, said stem separating said head from said attachment head.

3. The damper of Claim 2 wherein said stem and said head are cylindrical.

4. The damper of Claim 2 or 3 wherein said stem has a first radius and said head has a second radius, said second radius being greater than said first radius.

5. The damper of at least one of claims 2 to 4, wherein said detent protrusion is adapted to be engaged by a keyhole-shaped aperture including a first portion with a radius of curvature substantially equal to said first radius and a second portion with a radius of curvature substantially equal to said second radius.

6. The damper of at least one of the preceding claims wherein said partially circular interior wall is formed about a rotational axis, and wherein a gap is formed in said partially circular interior wall for receiving the cylindrical boss.

7. The damper of at least one of the preceding claims, wherein said partially circular interior wall has a triangular cross section with a partially circular interior apex formed by an intersection of oblique circular walls, said apex engaging the cylindrical boss.

8. The damper of Claim 7 wherein said partially circular interior wall allows the damper to rotate about said rotational axis, and wherein said partially circular interior apex allows the damper to pivot about an axis perpendicular to said rotational axis.

9. The damper of at least one of claims 6 to 8, wherein said gap is bounded by walls formed on planes which are free from intersection with said rotational axis.

10. The damper of at least one of the preceding claims, wherein said attachment device snap detent engages the cylindrical boss.

11. The damper of at least one of the preceding claims, wherein said damper housing includes a mouth through which said piston assembly passes, said mouth including means for engaging elastic rings for slidingly engaging said piston shaft.

12. The damper of at least one of the preceding claims, wherein said attachment device and said detent protrusion function free of secondary fasteners.
